# EUROPEAN PATENT APPLICATION

(11) **EP 4 606 749 A1**
(43) Date of publication of application: **27.08.2025**
(21) Application number: 25157849.8
(22) Date of filing: 14.02.2025
(51) Int. Cl.: B65H 19/18, B29C 65/02, B29C 65/16, B29C 65/78, B29C 65/00, B65B 51/26, B65H 23/038

(54) **SPLICING UNIT FOR SPLICING A SEALING STRIP OF HEAT-SEALABLE MATERIAL, APPARATUS FOR APPLYING A SEALING STRIP TO A WEB OF PACKAGING MATERIAL AND PACKAGING MACHINE FOR FORMING SEALED PACKAGES**

(30) Priority: 23.02.2024 IT 202400003913
(71) Applicant: Tetra Laval Holdings & Finance S.A., 1009 Pully (CH)
(72) Inventor: POLETTI, Gabriele, 41123 Modena (IT); RICCO', Marco, 41123 Modena (IT); CASELLI, Riccardo, 41123 Modena (IT); DAVOLI, Stefano, 41123 Modena (IT)
(74) Representative: Tetra Pak Patent Attorneys

(57) **Abstract**

There is described a splicing unit (18) for splicing a new sealing strip (13*) of heat-sealable material to a sealing strip (13) in use when the sealing strip (13) in use is about to exhaust, the splicing unit (18) comprising a sealing device (27) configured to seal the new sealing strip (13*) and the sealing strip (13) in use to one another and an advancement device (31) configured to convey the new sealing strip (13*) along a conveying path (Q*) towards the sealing device (27). The advancement device (31) is provided with a preparation roller (32) configured to accommodate the new sealing strip (13*) in preparation for splicing to the sealing strip (13) in use; the preparation roller (32) comprises a lateral surface (35) and a ridge element (50) protruding from the lateral surface (35), the ridge element (50) comprises ridge portions (36) arranged side by side, and spaced apart from one another so as to define a passage (P) for the new sealing strip (13*).

## Description

### TECHNICAL FIELD

The present invention relates to a splicing unit for splicing a sealing strip of heat-sealable material.

The present invention also relates to an apparatus for applying a sealing strip to a web of packaging material.

The present invention further relates to a packaging machine for forming sealed packages filled with a pourable product and having an apparatus for applying a sealing strip to a web of packaging material.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package has a longitudinal sealing band, a top transversal sealing band and a bottom transversal sealing band.

A typical packaging machine comprises a conveying device for advancing the web of packaging material, the sterilization apparatus for sterilizing the web of packaging material prior to its formation into the tube, a tube forming and sealing device configured to form the tube from the advancing web of packaging material and to longitudinally seal the tube, a filling device for filling the tube with the pourable product and the package forming apparatus adapted to form, transversally seal and cut individual packages from the tube of packaging material.

Furthermore, the packaging machine comprises a strip application apparatus.

Before the web of packaging material is formed into the tube and longitudinally sealed a sealing strip of heat-sealable material is applied and sealed onto a first longitudinal edge of the web of packaging material by the strip application apparatus. The web of packaging material is folded such that the sealing strip is in contact with the inner side of the tube. Thus, the sealing strip gets into contact with the pourable product.

More specifically, the sealing strip is normally heat-sealed to the layer of heat-seal plastic material forming the inner face of the package at a pressing station to which the web of packaging material and the sealing strip, one or both heated beforehand, are fed along, respectively, the web advancement path and a strip advancement path, and where the sealing strip is pressed onto the first longitudinal edge of the web of packaging material. After application, the sealing strip has a first longitudinal portion heat-sealed to the first longitudinal edge of the web, and a second longitudinal portion projecting from the first longitudinal edge of the web.

During formation of the tube from the web of packaging material together with the sealed sealing strip, a second longitudinal edge of the web of packaging material opposite to the first longitudinal edge is laid on the outside of the first longitudinal edge with respect to an axis of the tube being formed. More specifically, the sealing strip is located entirely inside the tube, and the face of the second longitudinal edge facing the axis of the tube is superimposed partly on the second longitudinal portion of the sealing strip, and partly on the face of the first longitudinal edge located on the opposite side with respect to the first longitudinal portion of the sealing strip.

The main scope of the sealing strip is to avoid that the first longitudinal edge of the web of packaging material gets into contact with the pourable product, as otherwise the packaging material would absorb the pourable product.

Additionally, the sealing strip prevents microorganisms possibly present on the first longitudinal edge of the web of packaging material from contaminating the pourable product packed in the package.

Furthermore, the sealing strip provides for improved strength and improved gas barrier properties of the seam portion. In order for the sealing strip to properly function, it is necessary to correctly position the sealing strip with respect to the web of packaging material.

The strip application apparatus comprises an advancement device for advancing the sealing strip along the strip advancement path and for placing the sealing strip onto the first longitudinal edge of the web of packaging material and a strip sealing device for sealing the sealing strip onto the first longitudinal edge of the web of packaging material. The strip sealing device further comprises a sealing head for heating the web of packaging material and/or the sealing strip and pressure rollers for pressing the web of packaging material and the sealing strip at a pressuring station.

The strip application apparatus further comprises a strip splicing unit configured to splice a new sealing strip to the sealing strip in use when the sealing strip in use is about to exhaust (preferentially without interrupting the production of the packaging machine) and a strip buffer apparatus arranged upstream of the strip sealing device and downstream of the strip splicing unit and configured to buffer the sealing strip.

Even though the strip splicing units and the strip application apparatuses of the known type provide for good results and work satisfactorily well, a need is felt within the industry to further improve their operation.

### DISCLOSURE OF INVENTION

It is therefore an object of the present invention to provide a splicing unit for splicing a sealing strip of heat-sealable material addressing the drawbacks of the prior art and, in particular, being easy and economical to be manufactured.

It is a further object of the present invention to provide an apparatus for applying a sealing strip to a web of packaging material addressing the drawbacks of the prior art and, in particular, being easy and economical to be manufactured.

It is a further object of the present invention to provide a packaging machine for forming sealed packages filled with a pourable product addressing the drawbacks of the prior art and, in particular, being easy and economical to be manufactured.

According to the invention there are provided a splicing unit for splicing a sealing strip of heat-sealable material, an apparatus for applying a sealing strip of heat-sealable material to a web of packaging material and a packaging machine for forming sealed packages filled with a pourable product according to the appended claims.

### BRIEF DESCRIPTION OF THE DRAWINGS

A non-limiting embodiment of the present invention will be described by way of example with reference to the accompanying drawings, in which:
- figure 1 is a schematic view of a packaging machine having a strip application apparatus according to the present invention, with parts removed for clarity;
- figure 2 is a schematic and perspective view of a package obtained during operation of the packaging machine of Figure 1, with parts removed for clarity;
- figure 3 is a schematic front view of a splicing unit for splicing a sealing strip of heat-sealable material according to the present invention, with parts removed for clarity;
- figure 4 is an enlarged view of a detail of figure 3, with parts removed for clarity; and
- figure 5 is a perspective view of a preparation roller of the splicing unit of figure 3.

### BEST MODES FOR CARRYING OUT THE INVENTION

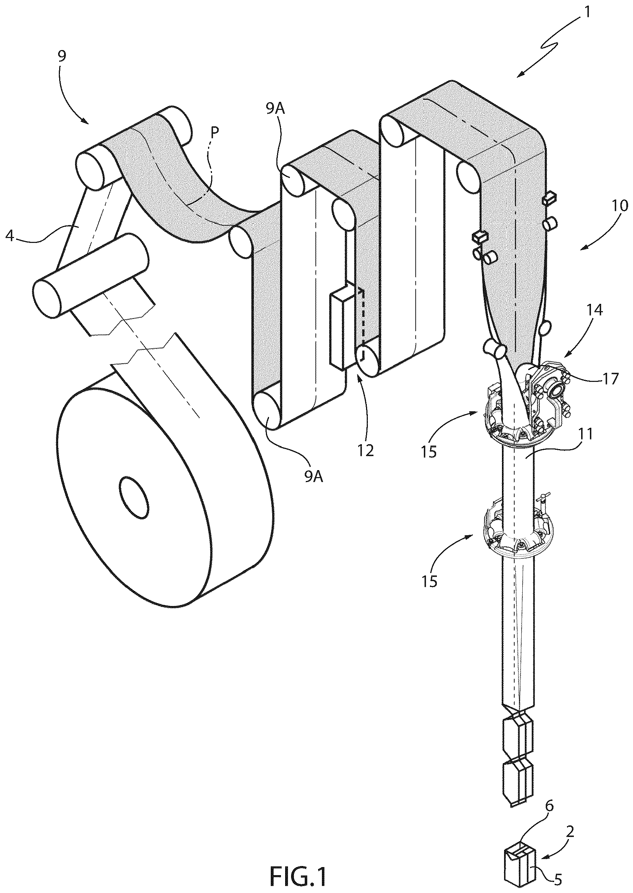

Number 1 in figure 1 indicates as a whole a packaging machine for packaging pourable products, in particular pourable food products, such as milk, cream, yoghurt drinks, yoghurt, fruit juice, wine, tomato sauce, sugar, salt, emulsions, solutions containing solid particles (e.g. legumes), etc., into packages 2.

Advantageously, the packages 2 are formed from a multilayer packaging material. The multilayer packaging material comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner surface 3 of the packages 2 contacting the pourable product packaged within the packages 2.

According to some possible non-limiting embodiments, the multilayer packaging material comprises a layer of gas- and light-barrier material, e.g. aluminum foil or ethylene vinyl alcohol (EVOH) film, in particular being arranged between one of the layers of heat-seal plastic material and the layer of fibrous material. Preferentially, the multilayer packaging material also comprises a further layer of heat-seal plastic material being interposed between the layer of gas- and light-barrier material and the layer of fibrous material. Preferentially, the multilayer packaging material is provided as an endless web 4 of packaging material.

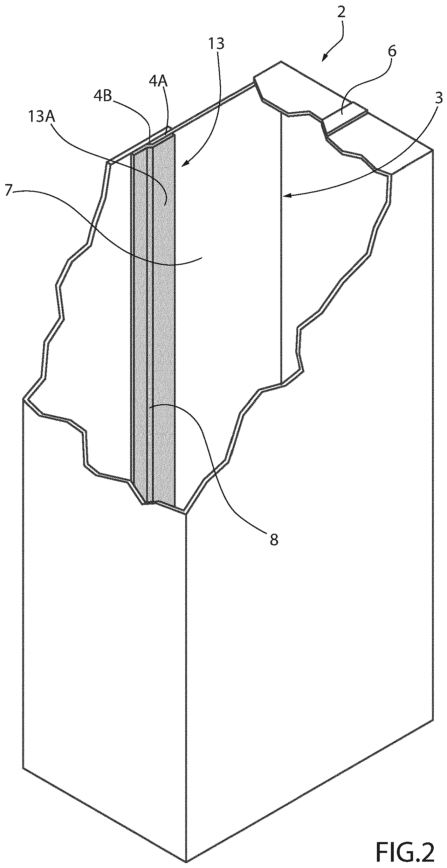

With particular reference to figures 1 and 2, each package 2 comprises a longitudinal seal portion 5 and a pair of transversal seal portions 6, in particular a top transversal seal portion and a bottom transversal seal portion (i.e., one transversal seal portion 6 at an upper end of the package 2 and another transversal seal portion 6 at a lower end of the package 2).

Within each package 2, an inner space 7 containing the pourable product is defined and delimited by the inner surface 3. In other words, the inner surface 3 faces the inner space 7 and is in contact with the pourable product.

Each package 2 comprises a sealing strip section 8 sealed and/or heat-fused onto the inner surface 3 and extending (substantially) parallel to the respective longitudinal seal portion 5.

With particular reference to figures 1 and 2, the packaging machine 1 comprises:
- a conveying apparatus 9 for advancing the web 4 of packaging material along a web conveying path P through guiding elements, in particular through a number of rollers 9A, to a tube forming and sealing unit 10, configured to gradually fold the web 4 of packaging material into a tube 11, preferentially by overlapping opposite longitudinal edges of the web 4 of packaging material with one another, and longitudinally sealing the tube 11;
- a strip application apparatus 12 for applying a sealing strip 13 of heat-sealable material, in particular heat-sealable plastic material, onto a longitudinal edge of the web 4 of packaging material (the sealing strip section 8 of each package 2 being formed by a portion of the sealing strip 13);
- a filling device 14 for filling the tube 11 with the pourable product; and
- a package forming unit (not shown) arranged along the web conveying path P downstream of the tube forming and sealing unit 10 and configured to form, transversally seal and cut the advancing tube 11 for forming the packages 2.

The strip application apparatus 12 is arranged upstream of the tube forming and sealing unit 10 along the web conveying path P. Preferentially, the packaging machine 1 also comprises a sterilizing unit (not shown) for sterilizing the advancing web 4 of packaging material.

More in detail, the web 4 of packaging material comprises a longitudinal edge 4A and a further longitudinal edge 4B spaced apart from the longitudinal edge 4A. In particular, the longitudinal edge 4A and the further longitudinal edge 4B are spaced apart along a transversal axis of the web 4 of packaging material. Furthermore, the tube forming and sealing unit 10 is configured to overlap the longitudinal edge 4A and the further longitudinal edge 4B with one another. The step of overlapping the longitudinal edge 4A and the further longitudinal edge 4B occurs with the sealing strip 13 having been sealed and/or heat-fused to the longitudinal edge 4A.

Preferentially, the tube forming and sealing unit 10 comprises at least two forming ring assemblies 15 configured to fold in cooperation with one another the web 4 of packaging material gradually into the tube 11. Furthermore, the tube forming and sealing unit 10 comprises a longitudinal sealing device (not shown) being configured to longitudinally seal the tube 11 along a longitudinal seam portion (which defines the longitudinal seal portions 5 of the packages 2). In particular, the longitudinal sealing device may be of the kind operating by means of induction heating or by a stream of a hot fluid or by means of ultrasound. The longitudinal sealing device comprises a sealing head at least partially interposed between the forming ring assemblies 15.

The filling device 14 comprises a filling pipe 17 in fluid connection with a pourable product storage tank (not shown) for storing/providing the pourable product to be packaged. The filling pipe 17 is at least partially arranged within the tube 11 and is configured to direct, in use, the pourable product into the tube 11.

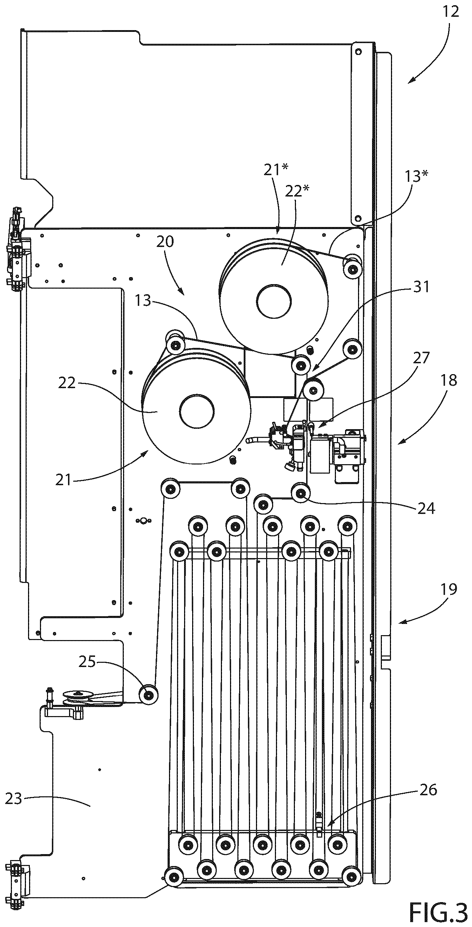

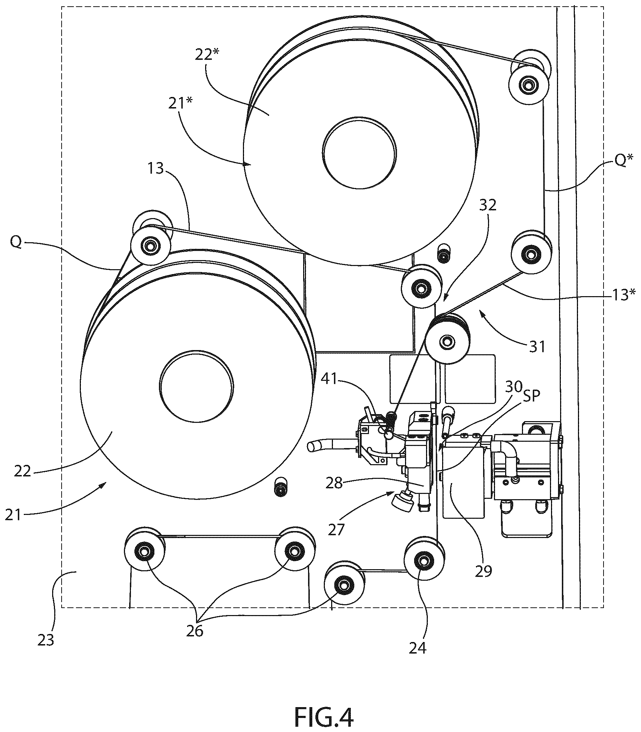

With particular reference to figures 3 and 4, the strip application apparatus 12 comprises:
- an advancement device (not shown and known as such) configured to advance the sealing strip 13 towards and onto the web 4 of packaging material, in particular towards and onto the longitudinal edge 4A;
- a strip sealing device (not shown and known as such) configured to seal the sealing strip 13, in particular a longitudinal portion 13A of the sealing strip 13, to the web 4 of packaging material, in particular to the longitudinal edge 4A;
- a strip splicing device 18 (a strip splicing unit) configured to splice a new sealing strip 13* to the sealing strip 13 in use when the sealing strip 13 in use is about to exhaust (preferentially without interrupting the production of the packaging machine 1); and
- a strip buffer device 19 configured to buffer the sealing strip 13.

The strip sealing device is configured to seal the sealing strip 13, in particular the longitudinal portion 13A, to the web 4 of packaging material, in particular to the longitudinal edge 4A, by heating the web 4 of packaging material, in particular the longitudinal edge 4A, and/or by heating the sealing strip 13, in particular the longitudinal portion 13A. The strip sealing device is further configured to press the web 4 of packaging material, in particular the longitudinal edge 4A, and the sealing strip 13, in particular the longitudinal portion 13A, against one another.

Advantageously, the strip application apparatus 12 also comprises a magazine device 20 arranged at a storing station and having a number of support devices for carrying respective reels of sealing strip. Advantageously, the magazine device 20 comprises two support devices. More specifically, the magazine device 20 comprises a support device 21 configured to carry the sealing strip 13 in use in a wound-up manner and a support device 21* configured to carry the new sealing strip 13* in a wound-up manner. The support device 21 and the support device 21* are configured to rotate around respective axes, in particular having a substantially horizontal orientation, and parallel one another. The support device 21 and the support device 21* are arranged substantially side-by-side. Advantageously, the support device 21 supports a reel 22 of the sealing strip 13 in use and the support device 21* supports a reel 22* of the new sealing strip 13*.

In use, the new sealing strip 13* is unwound from the reel 22* and fed along a (first) strip conveying path Q*. When unwound from the reel 22*, the new sealing strip 13* in use has the shape of a continuous planar web.

The sealing strip 13 in use is unwound from the support reel 22 and fed along a (second) strip conveying path Q. When unwound from the reel 22, the sealing strip 13 in use has the shape of a continuous planar web.

Advantageously, the strip buffer device 19 is arranged upstream of the strip sealing device and downstream of the strip splicing device 18 along the strip conveying path Q. In other words, the strip buffer device 19 is interposed between the strip sealing device and the strip splicing device 18 along the strip conveying path Q.

According to a preferred embodiment illustrated in figure 3, the strip application apparatus 12 is enclosed in a frame comprising a panel 23, in particular a mobile panel, supporting the strip splicing device 18, the strip buffer device 19 and the magazine device 20. More in detail, the strip splicing device 18, the strip buffer device 19 and the magazine device 20 are arranged on the same surface of the panel 23.

The strip buffer device 19 comprises an input roller 24 configured to receive the sealing strip 13 in use from the magazine device 20, an output roller 25 configured to feed the sealing strip 13 in use to the strip sealing device and a number of intermediate convey rollers 26 interposed between the input roller 24 and the output roller 25, configured to interact with the sealing strip 13 in use and to convey the sealing strip 13 in use along the strip conveying path Q. The input roller 24, the output roller 25 and the intermediate convey rollers 26 have respective rotational axes, preferably parallel one another.

The strip splicing device 18 is configured to splice the new sealing strip 13* and the sealing strip 13 in use to one another, when the sealing strip 13 in use is about to exhaust. More in detail, the strip splicing device 18 is configured to seal, in particular to heat seal, a leading (end) portion of the new sealing strip 13* to a trailing (end) portion of the sealing strip 13 in use.

Preferably, the strip splicing device 18 is arranged upstream of the strip buffer device 19 along the strip conveying path Q. In particular, the strip splicing device 18 is interposed between the magazine device 20 and the strip buffer device 19.

More specifically, the strip splicing device 18 comprises at least a sealing device 27 configured to seal, in particular to heat seal, the new sealing strip 13* and the sealing strip 13 in use to one another. Even more specifically, the strip splicing device 18 is adapted to heat seal the leading portion of the new sealing strip 13* to the trailing portion of the sealing strip 13 in use and to press the leading portion of the new sealing strip 13* and the trailing portion of the sealing strip 13 in use against one another. More in detail, the sealing device 27 can be of any kind suitable to heat the new sealing strip 13* and/or the sealing strip 13 in use. The sealing device 27 can be of the type heating by means of induction or by means of a hot fluid, such as hot air. In particular, the sealing device 27 comprises a sealing space SP through which the sealing strip 13 in use advances. Advantageously, the sealing device 27 comprises a first sealing plate 28 and a second sealing plate 29, in particular arranged adjacent, parallel and facing one another. The first sealing plate 28 and the second sealing plate 29 are normally spaced apart from one another to define the sealing space SP. The relative distance between the first sealing plate 28 and the second sealing plate 29 can be reduced to seal the leading portion of the new sealing strip 13* to the trailing portion of the sealing strip 13 in use.

Preferably, the first sealing plate 28 is fixed and the second sealing plate 29 is movable along a substantial horizontal direction from an open position in which the first sealing plate 28 and the second sealing plate 29 are spaced apart from one another to define the sealing space SP and a closed position in which the first sealing plate 28 and the second sealing plate 29 contact one another (with the new sealing strip 13* and the sealing strip 13 in use arranged therebetween) to seal the leading portion of the new sealing strip 13* to the trailing portion of the sealing strip 13 in use.

Preferably, the strip splicing device 18 also comprises a cutting device 30 adapted to cut the sealing strip 13 in use so as to define (obtain) the trailing portion of the sealing strip 13 in use. The cutting device 30 is arranged in the area of the sealing device 27. Preferably, the cutting device 30 is supported by the first sealing plate 28 or by the second sealing plate 29. The cutting device 30 is preferably a hot wire cutting device 30.

Preferably, the strip application apparatus 12 also comprises an advancement device 31 configured to advance the new sealing strip 13* from the magazine device 20 to the strip splicing device 19. The advancement device 31 comprises a number of guiding elements, in particular a number of rollers, configured to guide the new sealing strip 13* along the strip conveying path Q*.

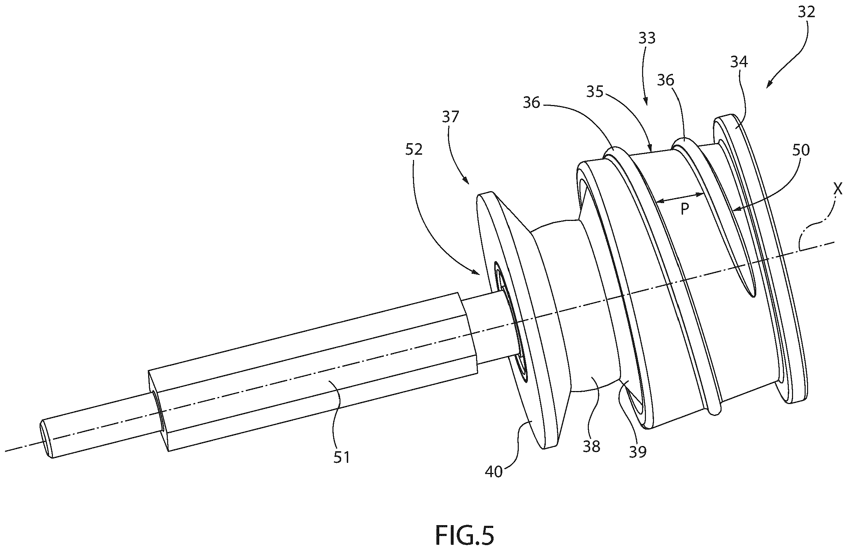

The advancement device 31 comprises a preparation roller 32 provided with a rotational axis X. The preparation roller 32 is rotatably supported by a supporting structure. Preferably, the supporting structure is the panel 23. According to figure 5, the preparation roller 32 has an external portion 33 (first portion) configured to accommodate the leading portion of the new sealing strip 13*. The external portion 33 has a substantially conical shape. More in detail, the external portion 33 is tapered towards the side opposite to the supporting structure. The external portion 33 has an external surface 35 and is provided with an annular appendix 34 protruding from the lateral surface 35 and arranged at an end of the preparation roller 32 opposite to the supporting structure, i.e. the end positioned further away from the supporting structure.

The external surface 35 has a truncated-cone shape tapered towards the side opposite to the supporting structure.

The external portion 33 is also provided with a ridge element 50 protruding from the lateral surface 35. The ridge element 50 may be a helical ridge element. The ridge element 50 may be thread element, in particular a helical thread element.

The ridge element 50 is so configured to form on the lateral surface 35 ridge portions 36. Preferably, the ridge portions 36 are thread portions. The ridge portions 36 are arranged side by side, substantially parallel and spaced apart from one another. The ridge portions 36 define a passage P for the new sealing strip 13*, in particular for the leading portion of the new sealing strip 13*. Advantageously, the passage P has a width along the rotational axis X that corresponds to a width of the new sealing strip 13*. Advantageously, the passage is a helical passage. The width of the helical passage corresponds to the pitch of the helical ridge element. In particular, the width of the helical passage corresponds to the pitch of the helical thread element.

The width of the passage P is at least 1 mm larger than the width of the new sealing strip 13*, in particular of the leading portion of the new sealing strip 13*. In particular, the width of the passage P is about 1 mm larger than the width of the new sealing strip 13*, in particular of the leading portion of the new sealing strip 13*. Preferably, the ridge portions 36 have a height comprised between 1 and 2 mm, preferably the height of the ridge portions 36 is about 1,6 mm.

According to figure 5, the preparation roller 32 has an internal portion 37 (second portion) interposed between the supporting stricture, in particular the panel 23, and the external portion 33.

The external portion 33 is arranged at a one end of the preparation roller 32 further away from the supporting structure and the internal portion 37 is arranged at another end of the preparation roller 32 closer to the supporting structure.

The internal portion 37 is configured to accommodate the sealing strip 13 in use. The internal portion 37 has a central part with a substantially cylindrical shape. Advantageously, the central part 38 has a width along the rotational axis X that corresponds to a width of the sealing strip 13 in use in particular of the trailing portion of the sealing strip 13 in use. In particular, the width of the central part 38 is about 0.5 mm larger than the width of the sealing strip 13 in use. The internal portion 37 further comprises a connection part 39 for connecting the central part 38 with the external portion 33. The connection part 39 has a substantially conical shape. More in detail, the connection part 39 is tapered towards the central part 38. Advantageously, the connection part 39 is configured to allow (together with the passage P) the transfer (sliding) of the new sealing strip 13* from the external portion 33 to the internal portion 37.

The internal portion 37 comprises a terminal part 40. The terminal part 40 has a substantially conical shape. More in detail, the terminal part 40 is tapered towards the central part 38. The central part 38 is interposed between the connection part 39 and the terminal part 40. Advantageously, the terminal part 40 is configured to laterally contain the sealing strip 13 in use.

Hence, the external portion 33 is configured to accommodate the new sealing strip 13* in preparation for splicing to the sealing strip 13 in use and the internal portion 37 is configured to accommodate the sealing strip 13 in use before splicing to the new sealing strip 13* and also the new sealing strip 13* after splicing to the sealing strip 13 in use.

The passage P is configured to drive the new sealing strip 13* from the external portion 33 to the internal portion 37. The ridge elements 36 move the new sealing strip 13* from the external portion 33 to the internal portion 37 when the preparation roller 32 is rotated around the rotational axis X once the new sealing strip 13* has been spliced to the sealing strip 13 in use.

It is noticed that the preparation roller 32 belongs to both the strip conveying path Q* and the strip conveying path Q. In other words, both the new sealing strip 13* and the sealing strip 13 in use are arranged at and/or interact with the preparation roller 32 in preparation for the splicing. In particular, the new sealing strip 13* is arranged in the external portion 33, in particular in the passage P, and the sealing strip 13 in use in arranged in the internal portion 37, in particular in the central part 38. More in particular, the external portion 33 is arranged along the strip conveying path Q* and the internal portion 37 is arranged along the strip conveying path Q.

The preparation roller 32 is rotatably coupled to the supporting structure through a shaft 51 which extends from one end portion 52 of the preparation roller 32 closer to the supporting structure and defines the rotational axis X.

The external surface 35 is tapered towards the side opposite to the shaft 51.

The advancement device 31 further comprises an elastic element 41 arranged downstream of the preparation roller 32 along the strip conveying path Q*. The elastic element 41 is configured to maintain the new sealing strip 13* in a fixed position at the sealing device 27, the fixed position being interposed between the first sealing plate 28 and the second sealing plate 29 in preparation for splicing. The elastic element 41 is further configured to release the new sealing strip 13* after splicing.

The method for splicing the sealing strip 13 in use to the new sealing strip 13* comprises a preliminary preparation step of conveying, in particular by the advancement device 31, the new sealing strip 13* along the strip conveying path Q*. In particular, the new sealing strip 13* is unwound from the reel 22* and is advanced through the passage P and to the elastic element 41. The new sealing strip 13* is arranged (and kept) in a fixed position at the sealing device 27.

In use, the first sealing plate 28 and the second sealing plate 29 are arranged in the open position to define the sealing space SP and the sealing strip 13 is advanced along the strip conveying path Q. In particular, the sealing strip 13 is continuously unwound from the reel 22 and conveyed through the sealing space SP between the first sealing plate 28 and the second sealing plate 29 and to the strip buffer device 19.

When the sealing strip 13 in use is almost exhausted, unwinding of the sealing strip in use 13 from the reel 22 is stopped and the sealing strip 13 in use is kept in a fixed position to allow splicing to the new sealing strip 13*. Operation of the packaging machine is not interrupted thanks to the strip buffer device 19.

The second sealing plate 29 is moved along the horizontal direction from the open position to the closed position in which the first sealing plate 28 and the second sealing plate 29 are substantially arranged in contact to one another to seal the leading portion of the new sealing strip 13* to the trailing portion of the sealing strip 13 in use. The cutting device 30 cuts the sealing strip 13 in use so as to obtain the trailing portion of the sealing strip 13 in use.

The second sealing plate 29 is subsequently moved back along the horizontal direction from the closed position to the open position so that the first sealing plate 28 and the second sealing plate 29 are arranged at a distance from one another to define the sealing space SP. The sealing strip 13 in use (i.e. the previous new sealing strip 13*) is then advanced along the strip conveying path Q through the sealing space SP and to the strip buffer device 19.

After splicing the new sealing strip 13* and the sealing strip 13 to one another, the preparation roller 32 starts to rotate around the rotational axis X and the passage P, i.e. the ridge elements 36, drives the new sealing strip 13* (becoming the sealing strip 13 in use) that moves, without being damaged, from the external portion 33, in particular from the passage P, to the internal portion 37, in particular to the central part 38.

The strip splicing device 18 described above has some advantages, in particular the configuration of the preparation roller 32 allows to keep the new sealing strip 13* in a predetermined position avoiding undesired movements before splicing and to effectively drive the new sealing strip 13* after spicing. In addition, the configuration of the preparation roller 32 provides a (lateral) support to the new sealing strip 13* before and after splicing to the sealing strip 13 in use.

### LIST OF REFERENCE NUMERALS

- 1: packaging machine
- 2: packages
- 3: inner surface
- 4: web of packaging material
- 4A,4B: longitudinal edge
- 5: longitudinal seal portion
- 6: transversal seal portion
- 7: inner space
- 8: sealing strip section
- 9: conveying apparatus
- 9A: roller
- 10: tube forming and sealing unit
- 11: tube
- 12: strip application apparatus
- 13: sealing strip in use
- 13*: new sealing strip
- 13A: longitudinal portion of the sealing strip
- 14: filing device
- 15: forming ring assembly
- 17: filing pipe
- 18: strip splicing device
- 19: strip buffer device
- 20: magazine device
- 21, 21*: support device
- 22, 22*: reel
- 23: panel
- 24: input roller
- 25: output roller
- 26: convey roller
- 27: sealing device
- 28: first sealing plate
- 29: second sealing plate
- 30: cutting device
- 31: advancement device
- 32: preparation roller
- 33: external portion
- 34: appendix
- 35: lateral surface
- 36: ridge portions
- 37: internal portion
- 38: central part
- 39: connection part
- 40: terminal part
- 41: elastic element
- 50: ridge element
- 51: shaft
- 52: end portion
- P: web conveying path
- Q, Q*: strip conveying path
- SP: sealing space
- X: rotational axis
- P: passage

## Claims

1. A splicing unit (18) for splicing a new sealing strip (13*) of heat-sealable material to a sealing strip (13) of heat-sealable material in use comprising:
- a sealing device (27) configured to seal the new sealing strip (13*) and the sealing strip (13) in use to one another; and
- an advancement device (31) configured to convey the new sealing strip (13*) along a conveying path (Q*) towards the sealing device (27);
wherein the advancement device (31) comprises a preparation roller (32) having a rotational axis (X) and being configured to accommodate the new sealing strip (13*) in preparation for splicing to the sealing strip (13) in use;
wherein the preparation roller (32) comprises a lateral surface (35) and a ridge element (50) protruding from the lateral surface (35), the ridge element (50) comprising ridge portions (36) arranged side by side and spaced apart from one another so as to define a passage (P) for the new sealing strip (13*).

2. A splicing unit according to claim 1, wherein the ridge element (50) is a helical ridge element and the ridge portions (36) define a helical passage (P).

3. A splicing unit according to claim 1 or 2, wherein the preparation roller (32) is rotatably supported by a supporting structure and the lateral surface (35) has a truncated-cone shape tapered towards the side opposite to the supporting structure.

4. A splicing unit according to any previous claim, wherein the preparation roller (32) is rotatably supported by a supporting structure and comprises an annular appendix (34) protruding from the lateral surface (35) and arranged at one end of the preparation roller (32) opposite to the supporting structure.

5. A splicing unit according to any previous claim, wherein the ridge element is a helical ridge element (50) and the ridge portions (36) define a helical passage (P) having a width along the rotational axis (X) that corresponds to a pitch of the helical ridge element (50).

6. A splicing unit according to any previous claim, wherein the passage (P) has a width along the rotational axis (X) that corresponds to a width of the new sealing strip (13*).

7. A splicing unit according to any previous claim, wherein the passage (P) has a width along the rotational axis (X) that is at least 1 mm larger than the width of the new sealing strip (13*).

8. A splicing unit according to any previous claim, wherein the preparation roller (32) comprises a first portion (33) configured to accommodate the new sealing strip (13*) in preparation for splicing to the sealing strip (13) in use and a second portion (37) configured to accommodate the sealing strip (13) in use before splicing to the new sealing strip (13*) and also the new sealing strip (13*) after splicing to the sealing strip (13) in use.

9. A splicing unit according to claim 8, wherein the preparation roller (32) is rotatably supported by a supporting structure, the first portion (33) being arranged at a one end of the preparation roller (32) further away from the supporting structure and the second portion (37) being arranged at another end of the preparation roller (32) closer to the supporting structure.

10. A splicing unit according to claim 8 or 9, wherein the passage (P) is configured to drive the new sealing strip (13*) from the first portion (33) to the second portion (37).

11. A splicing unit according to any previous claim, wherein the advancement device (31) comprises an elastic element (41) arranged downstream of the preparation roller (32) along the conveying path (Q*) and configured to maintain the new sealing strip (13*) in a fixed position in preparation for splicing and to release the new sealing strip (13*) after splicing.

12. A splicing unit according to any previous claim, and further comprising a cutting device (30) configured to cut the sealing strip (13) in use.

13. A strip application apparatus (12) for applying a sealing strip (13) of heat-sealable material onto a web (4) of packaging material comprising:
- an advancement device (18) configured to advance the sealing strip (13) towards and onto a longitudinal edge (4A) of the web (4) of packaging material;
- a strip sealing device (19) configured to seal a longitudinal portion (13A) of the sealing strip (13) to the longitudinal edge (4A); and
- a splicing unit (18) for splicing the new sealing strip (13*) to the sealing strip (13) in use according to any previous claim.

14. A packaging machine (1) for packaging a pourable product into packages (2) obtained from a web (4) of packaging material, the packaging machine (1) comprising a strip application apparatus (12) according to claim 13.

## Amended claims

### Amended claims in accordance with Rule 137(2) EPC.

1. A splicing unit (18) for splicing a new sealing strip (13*) of heat-sealable material to a sealing strip (13) of heat-sealable material in use comprising:
- a sealing device (27) configured to seal the new sealing strip (13*) and the sealing strip (13) in use to one another; and
- an advancement device (31) configured to convey the new sealing strip (13*) along a conveying path (Q*) towards the sealing device (27);
**characterized in that** the advancement device (31) comprises a preparation roller (32) having a rotational axis (X) and being configured to accommodate the new sealing strip (13*) in preparation for splicing to the sealing strip (13) in use;
wherein the preparation roller (32) comprises a lateral surface (35) and a ridge element (50) protruding from the lateral surface (35), the ridge element (50) comprising ridge portions (36) arranged side by side and spaced apart from one another so as to define a passage (P) for the new sealing strip (13*).

2. A splicing unit according to claim 1, wherein the ridge element (50) is a helical ridge element and the ridge portions (36) define a helical passage (P).

3. A splicing unit according to claim 1 or 2, wherein the preparation roller (32) is rotatably supported by a supporting structure and the lateral surface (35) has a truncated-cone shape tapered towards the side opposite to the supporting structure.

4. A splicing unit according to any previous claim, wherein the preparation roller (32) is rotatably supported by a supporting structure and comprises an annular appendix (34) protruding from the lateral surface (35) and arranged at one end of the preparation roller (32) opposite to the supporting structure.

5. A splicing unit according to any previous claim, wherein the ridge element is a helical ridge element (50) and the ridge portions (36) define a helical passage (P) having a width along the rotational axis (X) that corresponds to a pitch of the helical ridge element (50).

6. A splicing unit according to any previous claim, wherein the passage (P) has a width along the rotational axis (X) that corresponds to a width of the new sealing strip (13*).

7. A splicing unit according to any previous claim, wherein the passage (P) has a width along the rotational axis (X) that is at least 1 mm larger than the width of the new sealing strip (13*).

8. A splicing unit according to any previous claim, wherein the preparation roller (32) comprises a first portion (33) configured to accommodate the new sealing strip (13*) in preparation for splicing to the sealing strip (13) in use and a second portion (37) configured to accommodate the sealing strip (13) in use before splicing to the new sealing strip (13*) and also the new sealing strip (13*) after splicing to the sealing strip (13) in use.

9. A splicing unit according to claim 8, wherein the preparation roller (32) is rotatably supported by a supporting structure, the first portion (33) being arranged at a one end of the preparation roller (32) further away from the supporting structure and the second portion (37) being arranged at another end of the preparation roller (32) closer to the supporting structure.

10. A splicing unit according to claim 8 or 9, wherein the passage (P) is configured to drive the new sealing strip (13*) from the first portion (33) to the second portion (37).

11. A splicing unit according to any previous claim, wherein the advancement device (31) comprises an elastic element (41) arranged downstream of the preparation roller (32) along the conveying path (Q*) and configured to maintain the new sealing strip (13*) in a fixed position in preparation for splicing and to release the new sealing strip (13*) after splicing.

12. A splicing unit according to any previous claim, and further comprising a cutting device (30) configured to cut the sealing strip (13) in use.

13. A strip application apparatus (12) for applying a sealing strip (13) of heat-sealable material onto a web (4) of packaging material comprising:
- an advancement device (18) configured to advance the sealing strip (13) towards and onto a longitudinal edge (4A) of the web (4) of packaging material;
- a strip sealing device (19) configured to seal a longitudinal portion (13A) of the sealing strip (13) to the longitudinal edge (4A); and
- a splicing unit (18) for splicing the new sealing strip (13*) to the sealing strip (13) in use according to any previous claim.

14. A packaging machine (1) for packaging a pourable product into packages (2) obtained from a web (4) of packaging material, the packaging machine (1) comprising a strip application apparatus (12) according to claim 13.
